# EUROPEAN PATENT APPLICATION

(11) **EP 1 785 583 A2**
(43) Date of publication of application: **16.05.2007**
(21) Application number: 06255251.8
(22) Date of filing: 12.10.2006
(51) Int. Cl.: F01D 5/00

(54) **Blade shroud repair**

(30) Priority: 12.10.2005 US 249838; 12.10.2005 SG 200506494
(71) Applicant: Turbine Overhaul Services Private Limited, Singapore 638639 (SG)
(72) Inventor: Cheng, Kenny, Singapore 641681 (SG); Jek, Thomas Kin Keong, Singapore 679973 (SG); Cheong, Hans, Singapore 668876 (SG); Milleville, Timothy A., Portland, CT 06480 (US)
(74) Representative: Leckey, David Herbert

(57) **Abstract**

A method for restoring a turbine engine blade (20) includes removing material from a wear/damage site (184, 190) on an OD shroud (34) of the blade (20). Additional material (200, 220) is laser cladded to the site and then machined to restore the shroud (34).

## Description

### BACKGROUND OF THE INVENTION

The invention relates to gas turbine engines. More particularly, the invention relates to gas turbine engines having turbine blades with outer diameter (OD) shrouds.

Typical gas turbine engines include interspersed stages of rotating airfoils (blades) and non-rotating airfoils (vanes) in each of the compressor and turbine sections. Many different blade and vane configurations exist. Among blades, many typical configurations include an airfoil extending from an airfoil inboard end at a platform to a free tip. A mounting root (e.g., a convoluted so-called "fir tree") depends from the platform for attaching the blade to a separate disk. In such configurations, the tips of the mounted blades may rotate in close facing proximity to an associated circumferential blade outer air seal (BOAS) assembly carried by the engine case.

In some configurations, the airfoils carry mid-span and/or OD shrouds. The term "shroud" is often used interchangeably to denote the individual segment carried by an individual blade and the resulting full circumferential structure provided by the combination of segments of the stage of blades as attached to their associated disk.

A particular example of a blade stage having an OD shroud is the HPT first stage (T1) of the Pratt & Whitney (division of United Technologies Corporation, East Hartford, Connecticut) JT8D long-used, for example, in Boeing 727, 737, and DC-9/MD80 aircraft. Damage has been observed to the outboard surfaces of the OD shrouds.

A variety of restoration techniques have been proposed for turbine engine components. These include welded prostheses, and various build-up repairs including brazing, welding, and depositions. U.S. Patent Application Publication 20050178750A1 discloses laser cladding remanufacturing of sulphidation-attacked turbine engine parts, with specific reference to platforms. U.S. Patent Application Publication 20040086635A1 discloses laser cladding remanufacturing of a damaged gas turbine engine stationary (non-rotating) shroud.

### SUMMARY OF THE INVENTION

One aspect of the invention involves a method for restoring a turbine engine blade. Material is removed from a wear/damage site on an OD shroud of the blade. Additional material is laser cladded to the site and then machined to restore the shroud.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

FIG. 1 is view of a prior art HPT blade.
FIG.2 is a side view of the blade of FIG. 1.
FIG. 3 is an outboard end view of the blade of FIG. 1.
FIG. 4 is a cutaway side view of the blade of FIG. 1 installed in an engine.
FIG. 5 is an outboard end view of the blade of FIG. 1 in a worn condition.
FIG. 6 is an outboard end view of the blade of FIG. 1 in a first intermediate condition of restoration according to the present invention.
FIG. 7 is an outboard end view of the blade of FIG. 1 in a second intermediate condition of restoration according to the present invention.

Like reference numbers and designations in the various drawings indicate like elements.

### DETAILED DESCRIPTION

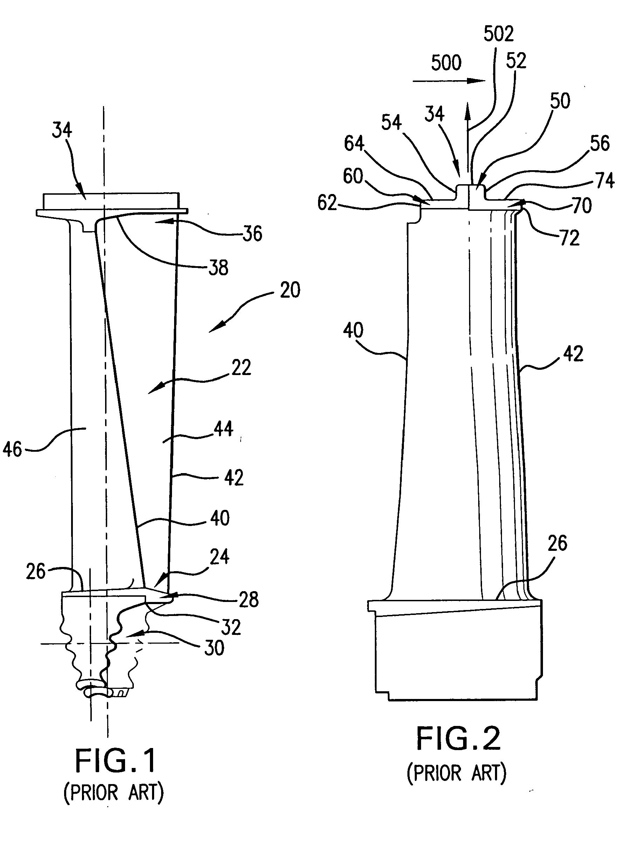

FIG. 1 shows an exemplary shrouded blade 20. The exemplary blade is generally representative of one prior art first stage HPT blade used on various members of the Pratt & Whitney JT8D engine family. However, the methods described below may be applied to other blades.

The blade may be made as a superalloy casting (e.g., of a nickel-base superalloy such as MAR-M-200+Hf originally developed by Lockheed Martin or PWA1447 of Pratt & Whitney), optionally coated (e.g., with a thermal barrier coating such as PWA70/73 dual coating, PWA 270/273 dual coating, or PWA 36095 platinum aluminide, all of Pratt & Whitney). The exemplary blade 20 has an airfoil 22 extending radially outward from an inboard end 24 at an outboard surface 26 of a platform 28. The radial direction is defined relative to an engine centerline when the airfoil is mounted to a disk (not shown). The blade includes a fir tree attachment root 30 depending from an inboard surface (underside) 32 of the platform 28. The blade includes an OD shroud 34 at the outboard end 36 of the airfoil. The shroud underside 38 and platform outboard surface 26 locally define respective outboard and inboard extremes of the engine core flowpath.

The airfoil includes a leading edge 40, a trailing edge 42. The airfoil has a generally concave pressure side 44 and a generally convex suction side 46 extending between the leading edge 40 and the trailing edge 42.

For reference, FIG. 2 shows an aftward/generally downstream direction 500 and the radial (radially outward) direction 502. FIG. 2 shows the shroud 34 as having a central radially-outwardly projecting spoiler 50 generally formed as a segment of an annular flange. The spoiler 50 has an outboard surface 52, a radially-extending forward/upstream/leading surface 54, and a radially-extending aft/downstream/trailing surface 56. On a leading side of the spoiler, the shroud includes a leading portion 60 extending to a leading rim 62 and having an outboard surface 64. On a trailing side of the spoiler, the shroud includes a trailing portion 70 extending to a trailing rim 72 and having an outboard surface 74.

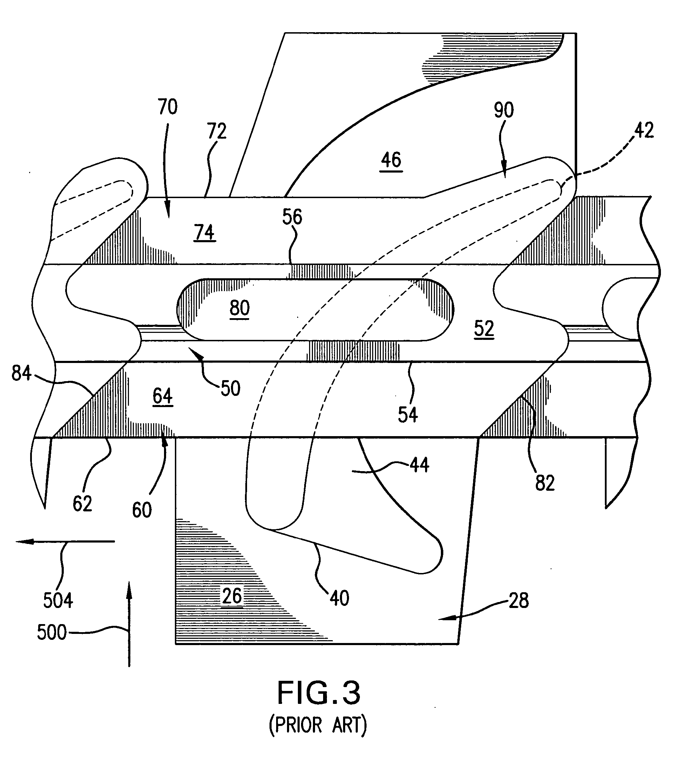

FIG. 3 shows the spoiler 50 as including a lightening compartment 80 extending inward from the surface 52. FIG. 3 further shows the shroud as including first and second circumferential ends 82 and 84, respectively associated with pressure and suction sides of the airfoil. The ends 82 and 84 are convoluted to permit a preloaded interlocking nesting between shrouds of adjacent blades in the blade stage. The interlocking aligns the surfaces 52, 54, 56, 64, and 74 with their counterparts of the remaining blades in the stage. The rim 62 is essentially annular so that the assembled shroud formed by the shrouds 34 has an annular leading rim formed by the rims 62. The rim 72 is mostly annular (e.g., annular along a majority of its circumferential span) but protrudes along a protruding portion 90 at a trailing portion of the airfoil. Thus, the assembled shroud formed by the shrouds 34 has a generally annular trailing rim formed by the rims 72 with an array of protrusions. A direction of rotation 504 of the blade stage is also shown.

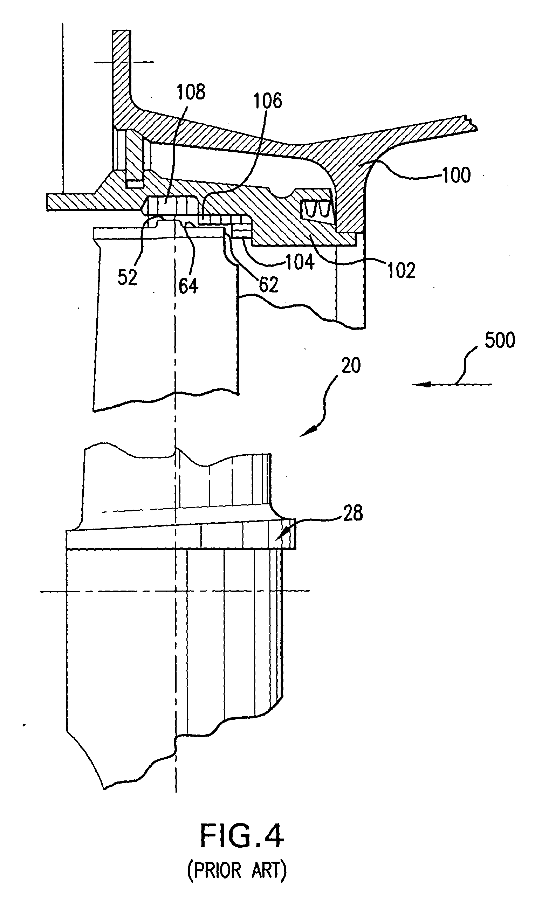

FIG. 4 shows the blade 20 in an installed position within an engine case 100. The case carries a circumferentially segmented seal carrier 102. The seal carrier carries honeycomb seal elements 104, 106, and 108 respectively facing and sealing with the leading rim 62, the leading portion outer surface 64, and the spoiler outer surface 52.

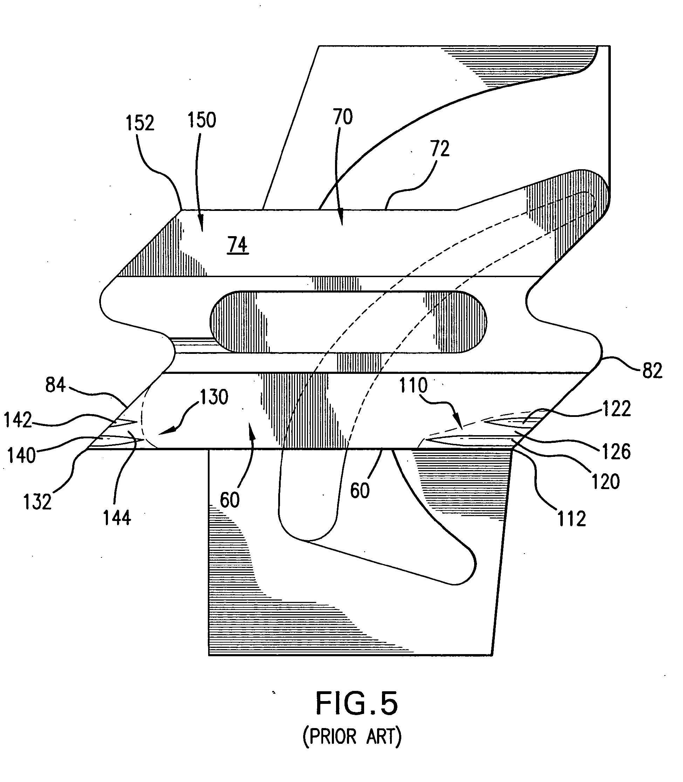

FIG. 5 shows wear patterns that have been observed on the shroud 34. A significant region of wear is a region 110 in the surface 64 adjacent a corner 112 of the shroud leading portion 60 formed by the rim 62 and the end 82. Wear in the region 110 (shown approximately bounded by a dashed line) is characterized by a combination of deep circumferential scoring (e.g., 120 and 122) and more generalized thinning wear 126). A less significant wear region 130 is shown in the surface 64 adjacent a corner 132 of the shroud leading portion 60 formed by the rim 62 and the end 84. When the stage is assembled, this region 130 is contiguous with the adjacent region 110 of the adjacent blade. Scoring 140 and 142 in this region may be continuations of the scoring of the adjacent region 110 of the adjacent blade. There may also be thinning wear 144. Wear has also been observed in a region 150 shown in the surface 74 adjacent a corner 152 of the shroud trailing portion 70 formed by the rim 72 and the end 84.

Due to factors not fully understood, the wear in the region 110 may be particularly significant. There may be a relationship to the relative thinness of the shroud in this region as further influenced by dynamic factors.

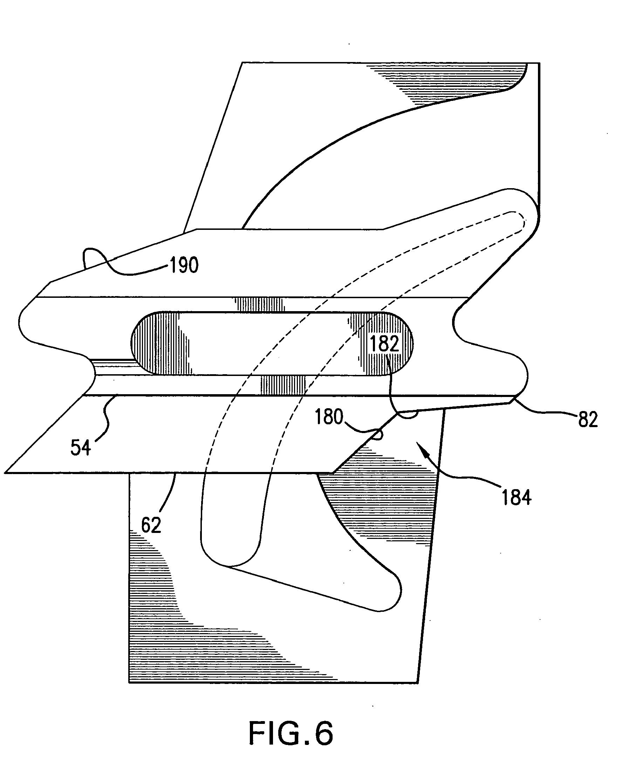

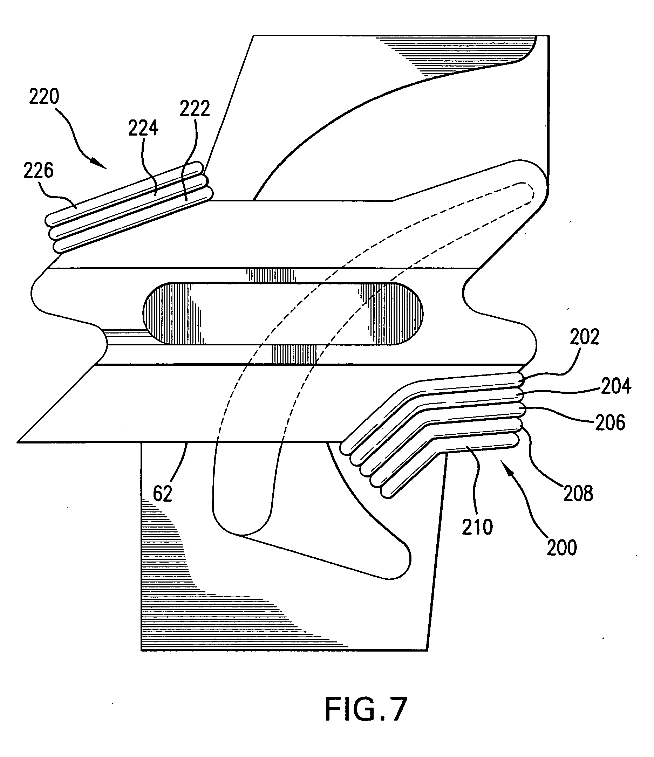

FIGS. 6 and 7 show exemplary details of a restoration process. After any cleaning and inspection (e.g., to assess damage and confirm restorability), the worn areas may be machined to create a base surface for laser cladding. In FIG. 6, the region 110 has been completely removed by such machining (e.g. machining all the way through to the underside 38). The exemplary machining is down to facets 180 and 182 to define a notch 184 relative to the original platform contour. The exemplary facet 182 extends to the rim 62 so that an exemplary 10-33% (more narrowly, 17-27%) of the rim 62 is removed by the notch 184. Similarly, the facet 182 extends from the end 82, just ahead of the surface 54 to the facet 180. The exemplary facet 182 is located so that the notch 180 removes an exemplary 60-100% (more narrowly 75-95%) of the end 82 along the leading portion 60.

Although not required, FIG. 6 also shows an exemplary machining to remove the area 150. This machining involves a single facet 190 having removed a corner region.

After any further cleaning, restoration material may be built up atop the machined facets. FIG. 7 shows a buildup 200 filling the notch 184. The buildup 200 is formed by a series of laser clad beads starting with a first bead 202 formed atop the facets 180 and 182. Exemplary second, third, fourth and fifth/final beads 204, 206, 208, and 210, respectively are formed on atop the other until sufficient material is applied. Depending upon the damage extent, exemplary restoration may involve an exemplary 2-10 beads (more narrowly 3-7). FIG. 7 also shows a buildup 220 applied atop the facet 190 and including beads 222, 224, and 226.

Exemplary laser cladding techniques and apparatus are disclosed in U.S. Patent Application Publication 20050178750A1. Exemplary cladding material has a composition that is preferably essentially the same as the base material of the blade at the facets.

After buildup, the buildups may be machined to restore the original local contour. The machining may involve a slight machining along non-built-up areas (e.g., intact portions of the surfaces 64 and 74 for continuous circularity). After machining, the blade may be locally or generally recoated.

Relative to tungsten inert gas (TIG) welding laser cladding is believed to generate a substantially smaller heat affected zone in the area being repaired. As a result, there is a reduction in post-weld stress and the structural integrity of the part is not compromised. There is also reduced or eliminated chances of distortion of the part which may be encountered with TIG welding. Laser cladding also offers a fast cycle time and high repeatability.

One or more embodiments of the present invention have been described. Nevertheless, it will be understood that various modifications may be made without departing from the scope of the invention. For example, the nature of particular damage may influence the appropriate repair. The choice of any particular known or yet-developed laser cladding apparatus may also influence details. Accordingly, other embodiments are within the scope of the following claims.

## Claims

1. A method for processing a turbine engine blade (20) having an OD shroud (34) comprising:
removing material from a predetermined portion (110, 130, 150) of an OD shroud (34) of the blade (20);
laser cladding additional material (200, 220) to the portion (110, 130, 150); and
machining at least some of the additional material (200, 220) .

2. The method of claim 1 wherein:
the portion (110, 130, 150) is to a leading side (54) of a spoiler (50) of the shroud (34).

3. The method of claim 1 or 2 wherein:
the portion (110, 130, 150) is to a pressure side (44) of an airfoil (22) of the blade (20).

4. The method of any preceding claim wherein:
the portion (110, 130, 150) is a corner portion (112, 132, 152), not reaching the spoiler (50).

5. The method of any preceding claim wherein:
the portion (110, 130, 150) is a corner portion (112, 132, 152), not including a majority of a length of a leading rim (62) of the leading side (60).

6. The method of claim 1 wherein:
the portion is to a trailing side (56) of a spoiler (50) of the shroud (34).

7. The method of claim 6 wherein:
the portion is to a suction side (46) of an airfoil (22) of the blade.

8. The method of any preceding claim wherein:
blade (20) is an HPT first stage blade.

9. The method of any preceding claim wherein:
the laser cladding applies 3 to 7 beads (202, 204, 206, 208, 210, 222, 224, 226) to the site.

10. The method of any preceding claim wherein:
the laser cladding applies a substantially non-radial stack of beads (202, 204, 206, 208, 210, 222, 224, 226) to the site (200, 220).

11. The method of any preceding claim wherein:
the machining locally thins a remaining portion of the shroud (34) beyond the site (200, 220).

12. The method of any preceding claim wherein:
the blade (20) had previously had been processed according to claim 1 at the same site; and
the method further includes determining whether a thickness of a remaining portion of the shroud beyond the site (200, 220) is sufficient.
